(19)

**Europäisches Patentamt**

**European Patent Office**

**Office européen des brevets**

(11) **EP 4 751 819 A2**

(12) **EUROPEAN PATENT APPLICATION**

(43) Date of publication:
03.06.2026 Bulletin 2026/23

(21) Application number: 26170062.9

(22) Date of filing: 31.03.2023

(51) International Patent Classification (IPC):
**B06B 1/06** $^{(2006.01)}$

(52) Cooperative Patent Classification (CPC):
**B06B 1/06;** B06B 1/0607; B06B 1/0644;
B06B 2201/55

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: 01.04.2022 GB 202204823

(62) Document number(s) of the earlier application(s) in accordance with Art. 76 EPC:
**23718804.0 / 4 504 428**

(71) Applicant: **Sintef TTO AS**
**7465 Trondheim (NO)**

(72) Inventors:
• **DAHL, Tobias**
**N-0880 Oslo (NO)**
• **TYHOLDT, Frode**
**N-1482 Nittedal (NO)**

(74) Representative: **Dehns**
**10 Old Bailey**
**London EC4M 7NG (GB)**

Remarks:
This application was filed on 31.03.2026 as a divisional application to the application mentioned under INID code 62.

(54) **ULTRASONIC TRANSDUCER HOUSING**

(57) A method of imaging using a PMUT or an array of PMUTs (302) includes the steps of: determining an acoustic transfer function corresponding to the effect of discrete reflectors (110a, 110b, 111a, 111b) positioned between the PMUT or PMUT array (302) and a scene to be imaged; imaging the scene using the PMUT or PMUT array (302) by transmitting an ultrasonic signal and receiving the ultrasonic signal at the PMUT or PMUT array (302), after the ultrasonic signal has undergone one or more reflections; and processing the received ultrasonic signal to generate an image by applying the inverse of the acoustic transfer function to the received ultrasonic signals.

FIG 19

**Description**

This invention relates to housings for ultrasonic transducers. Ultrasonic transducers are devices that generate and receive sound waves with frequencies higher than those audible to humans. They can be used in many applications from simple ranging applications, where the distances to objects can be estimated by measuring the time between transmitting an ultrasound signal and receiving a reflected echo signal, to complex medical imaging applications.

In many applications it is important to make transducers as small as possible - either because they are to be fitted into a small device or to allow large arrays to be used. One technology that has been developed for this purpose is that of piezoelectric micro-machined ultrasonic transducers (PMUTs) where a PMUT element may typically act as both a transmitter and receiver when coupled to the appropriate circuitry.

Housings for ultrasonic transducers may be used to protect the PMUTs from external wear and tear.

It is an object of the invention to provide improvements in certain aspects over currently available PMUTs.

When viewed from a first aspect the present invention provides a piezoelectric micro-machined ultrasonic transducer (PMUT) arranged to interface with an acoustic resonance cavity, wherein the acoustic resonance cavity has at least one acoustic property which is adjustable in use depending on a signal being transmitted or received by the PMUT.

The invention extends to a method of imaging using the PMUT described above.

Thus it will be seen by those skilled in the art that in accordance with the invention, an acoustic property of the acoustic resonance cavity with which the PMUT interfaces is adjustable. Through adjustment of a property of the acoustic resonance cavity, an outgoing or incoming ultrasonic impulse or signal may be modified. The Applicant has recognised that this may be beneficial - e.g. to improve ultrasonic imaging - by improving the efficiency with which a PMUT produces an image.

In a set of embodiments, the adjustable property is the acoustic resonance volume of the acoustic resonance cavity. For example, the acoustic resonance volume of the acoustic resonance cavity may be adjusted to match its resonant frequency to the outgoing frequency of a transmitted ultrasonic signal. This allows the cavity to be optimised even when the frequency used is not constant as will often be the case in a typical application. By matching the resonant frequency of the cavity to the outgoing frequency, the effective signal strength may be maximised for a given drive power. Similarly, matching the resonant frequency to that of an incoming signal may maximise the effective received signal strength of an ultrasonic receiver.

The acoustic resonance volume may be adjusted in multiple ways, and in a set of embodiments, the acoustic resonance cavity comprises a deformable diaphragm, wherein a position and/or shape of the diaphragm is adjustable to adjust the acoustic resonance volume of the cavity. In some embodiments, the PMUT is provided on the deformable diaphragm such that the PMUT itself also moves with the diaphragm to adjust the volume within the acoustic resonance cavity.

Alternatively, to adjust the properties of acoustic resonance cavity, in a set of embodiments the acoustic resonance cavity comprises an amorphous medium through which said ultrasonic signals pass in use, said amorphous medium comprising a plurality of discrete reflectors distributed therein, wherein the discrete reflectors have positions which are adjustable in use to adjust said acoustic property of the acoustic resonance cavity.

The Applicant has recognised that having a plurality of discrete reflectors in an amorphous medium is novel and inventive in its own right, and thus according to a second aspect of the present invention, there is provided a piezoelectric micro-machined ultrasonic transducer (PMUT) arranged to interface with an amorphous medium such that in use ultrasonic signals to or from the PMUT pass through said amorphous medium, said amorphous medium comprising a plurality of discrete reflectors distributed therein.

The invention extends to a method of imaging using the PMUT described above.

The discrete reflectors may be a plurality of physically separate reflectors, e.g. completely physically separate reflectors, e.g. distributed in the amorphous medium. However, the discrete reflectors may be discrete parts of a structure. One or more of the discrete reflectors may be in contact with at least one other discrete reflector, e.g. one or more of the discrete reflectors may be touching or physically connected. For example, the plurality of discrete reflectors may form a structure having a plurality of holes. In a set of embodiments, therefore, the plurality of discrete reflectors are elements of a structure having a plurality of holes.

In some embodiments, therefore, the discrete reflectors form a mesh, e.g. a fibre mesh such that the plurality of discrete reflectors are elongate, e.g. fibres. The mesh may comprise overlapping discrete reflectors. The mesh may be a woven mesh.

In other embodiments, the discrete reflectors form a porous membrane, the plurality of discrete reflectors being the material between pores of the membrane. The porous membrane may be synthetic or natural and may be formed by perforation.

The discrete reflectors may be rigid. Alternatively, the discrete reflectors may be deformable, e.g. flexible or elastic.

The structure may in the form of a relatively thin layer so that the reflectors are distributed in two-dimensions across a surface. Such a surface may be, but is not necessarily, substantially planar. However, in some embodiments, the discrete reflectors are distributed in three dimensions.

The holes need not be uniform, e.g. they may have non-uniform spacing and be unevenly distributed across the structure.

The structure, e.g. the mesh or the porous membrane, may introduce a source for diffraction and/or reflection affecting ultrasonic signals transmitted from the PMUT and/or received by the PMUT. The structure may beneficially also provide environmental protection, especially if the structure is a mesh or a porous membrane.

When the PMUT is used for imaging, the structure with holes, as described above, is preferably positioned between the PMUT and a scene to be imaged, e.g. in the path of the signals transmitted or received by the PMUT. The skilled person will appreciate that, owing to the perturbations caused by the discrete reflectors in the structure, the structure may help to effectively widen the field of view of the PMUT.

This may be achieved by the beam-spreading effect that the discrete reflectors have on an ultrasonic signal as it is transmitted through the amorphous medium. As the ultrasonic beam propagates through the amorphous medium reflections and diffraction at the discrete reflectors cause the directions of the ultrasonic signal to spread, increasing overall the divergence of the ultrasonic beam as it travels through the amorphous medium. This effectively fans out the ultrasonic signal to provide a more omnidirectional output, which widens the field of view. This effect is also frequency dependent as components of the ultrasonic signal having different frequencies will be reflected at different angles. Furthermore, knowing the effect of the structure on the ultrasonic signals, e.g. by knowing its transfer function, helpfully provides more information to be used in signal processing when using the PMUT for imaging.

The amorphous medium may be acoustically reflective or non-reflective, and in a set of embodiments the amorphous medium comprises a gel. The amorphous medium may alternatively comprise a liquid or gas, e.g. within the acoustic resonance cavity. For example, the amorphous medium may comprise air.

In a set of embodiments of the second aspect of the invention the discrete reflectors have positions which are adjustable in use to adjust said acoustic property of the acoustic resonance cavity. This may provide the advantages set out in accordance with the first aspect of the invention.

Moreover, through adjustment of the positions of the reflectors, the direction of any output signal may be adjusted, as well as the density of the medium in front of the PMUT, creating a local speed of sound change, which may in turn be used for example to create a lens effect in front of the PMUT.

The positions of the discrete reflectors may be adjusted in multiple ways. In a set of embodiments, the discrete reflectors are metallic and the positions of the discrete reflectors are adjusted using a magnetic field. In a further set of embodiments, a piezoelectric contraction element is arranged around the acoustic resonance cavity. When an electric current is applied to such a piezoelectric contraction element, it will contract and therefore act to squeeze the acoustic resonance cavity, adjusting the positions of the reflectors within through force transmitted from the contraction force via the amorphous medium.

In a set of embodiments the PMUT comprises an ultrasonic transmitter and the acoustic resonance volume is adjusted to match a transmitted signal. For example when using the PMUT to transmit a signal with a widely varying frequency, the acoustic resonance volume may be adjusted such that the resonant frequency of the cavity matches that of the current transmitted signal to optimise the transmission. As the frequency of the transmitted signal varies, the volume of the acoustic resonance cavity can be varied to match. A high-power varying frequency signal may be achieved more easily using a cavity in accordance with the present invention, as opposed to a prior-art, non-adjustable cavity.

Typically, prior art methods of producing a broadband signal using a PMUT modified the output energy of the PMUT when adjusting the frequency of the signal emitted by the PMUT. However, this is not energy efficient as to emit a chirp from frequency F0 to F1, the resonance peak may be at (F1+F0)/2. In order to achieve a flat output spectrum, less energy may have to be output at this resonant frequency which is not efficient. The overall output energy may therefore be reduced, and the efficacy of the PMUT for high sensitivity imaging applications reduced.

By contrast, in accordance with the present invention, the acoustic resonance volume of the cavity may be adjusted as the frequency of the signal emitted by the PMUT changes during a chirp transmission. This may reduce the extent to which the output energy needs to be reduced, allowing a relatively flatter output spectrum to be achieved with a higher overall output energy compared to the prior art methods described above. Therefore, the output energy may not require the same degree of adjustment as the frequency is changed in order to achieve a flat broadband output signal, and therefore the PMUT may be used for applications requiring a high output energy, such as long-distance imaging, or imaging requiring a good SNR (such as super-resolution imaging). The output signal to-be-transmitted would preferably be pre-computed and stored in memory before transmission, rather than being adjusted-on-the-go during transmission.

However, other parameters may be adjusted to bring down the output signal energy - e.g. the PMUT itself and the "shape-changing " housing.

In a set of embodiments the PMUT comprises an ultrasonic receiver and the acoustic resonance volume is adjusted to match a received signal. If the PMUT is used for reception of a reflected chirp, any output frequency may be received at any time, as a result of echoes from objects at different distances resulting from the outgoing chirp signal. If the imprecise distance to the reflective object of interest is known, the rough expected time of the reflected echo is also known. The volume of the acoustic resonance cavity may therefore be adjusted, in accordance with the present invention, at this time in order to amplify the incoming signal at the point when it is expected to arrive, therefore resulting in better signal reception.

In a set of embodiments the PMUT comprises a dedicated ultrasonic transmitter and at least one separate ultrasonic receiver on a single common semiconductor die. This allows for simultaneous transmission and receiving of signals, and therefore no switching electronics are required to switch between a "transmission mode" and "reception mode". This reduces the complexity of the system electronics. Further benefits of having a dedicated ultrasonic transmitter and at least one separate ultrasonic receiver on a single common semiconductor die are set out in WO 2021/079160.

In a set of embodiments the cavity comprises openings to output and/or receive an ultrasonic signal. In such embodiments, the acoustic resonance cavity may form a Helmholtz resonator.

In a set of embodiments, the PMUT is mounted so as to be moveable by an actuator - e.g. a motor. The actuator may be used to move the PMUT in order to emit signals in different directions, for example when learning the effect of the acoustic resonance cavity on any transmitted or received signals.

There is also provided by the invention a system for transmitting and receiving ultrasonic signals comprising at least first and second PMUTs as described in any of the aspects or embodiments above, a transmitter circuit arranged to drive said first PMUT as an ultrasonic transmitter and a receiver circuit arranged to detect signals from said second PMUT as an ultrasonic receiver.

In a set of embodiments of the first or second aspect of the invention, there is provided an arrangement comprising a plurality of said PMUTs. In a set of such embodiments, the plurality of the PMUTs are arranged in a tessellated array.

It will be appreciated that the PMUTs in the tessellated array may be separated by any length, however in a set of embodiments the PMUTs are spaced by $\lambda/2$, wherein $\lambda$ is the wavelength of a central frequency over the range of frequencies at which the PMUTs transmit or receive. As will be appreciated by those skilled in the art of array signal processing, this is the optimum spacing for carrying out beamforming and the like. Thus whilst the array could be used as 'one common sensor', i.e. by summing or averaging the signals coming from them, or by using them to transmit identical signals alternatively, their inputs or outputs can be used individually, as part of an array processing method that treats each of the PMUT elements individually. This has certain benefits, such as the ability to better focus in on, or cancel out, sounds coming from specific directions.

In a set of embodiments the array of PMUTs is arranged to interface with an acoustic resonance cavity comprising an acoustically non-reflective amorphous medium comprising a plurality of discrete acoustic reflectors.

The properties of the acoustic resonance cavity for the array of PMUTs may be adjusted similarly to the acoustic resonance cavity described above for a PMUT.

Determined phase adjustments may be applied to the signals from respective transmitters or receivers to allow them to act as a coherent array - e.g. for beamforming. Beam steering may be used on either the transmitted ultrasonic signal, reflected ultrasonic signal, or both. In order to steer the transmitted ultrasonic signal, the determined phase adjustments may be added to the signal transmitted by each PMUT in the array such that the resultant transmitted ultrasonic signals undergo interference, resulting in an overall signal which is transmitted in the desired direction. The received, reflected ultrasonic signal may be steered in a similar way. Determined phase adjustments may be applied to the received signals from all directions to determine the reflected signal from a single direction in the surrounding structure. In contrast to using the array as 'one common sensor', as described above, where the signal is strengthened through the use of multiple PMUTs, but which only transmits in one direction, applying determined phase adjustments to the transmitted/received signals further allows steering of a transmitted/received signal.

Altering the position of the acoustic reflectors may be used to "steer" a transmitted or received ultrasonic signal through the cavity. In order to achieve high quality signal transmission and reception, it is often desirable to move the positions of the PMUTs during transmission and reception, however this is clearly impractical. Adjusting the properties of the medium through which the signal is transmitted or received by adjusting the position of the acoustic reflectors may be able to achieve a similar net effect to adjusting the positions of the PMUTs themselves.

In accordance with the present invention, when transmitting a chirp signal from F0 to F1, the position of the acoustic reflectors may be adjusted within the medium such that at any given time, the PMUTs are "spaced" at a half wavelength relative to the current frequency. Better imaging capabilities may therefore be achieved at all frequencies through adjustment of the acoustic reflectors. Modifying the positions of the acoustic reflectors in front of the array of PMUTs may create a lens effect, steering the ultrasonic signal.

In a set of embodiments, one or more housing layers are arranged above the acoustic resonance cavity which comprises a PMUT array. One or more of the housing layers may be compressed e.g. by means of a piezoelectric contracting element surrounding them, therefore deforming the or each such housing layer. This will vary the pressure in each layer and the variation in pressure creates a sound gradient that can provide a "lens effect",

According to a further aspect of the present invention, there is provided a plurality of acoustic resonance cavities, each acoustic resonance cavity comprising an array of PMUTs arranged to interface with the acoustic resonance cavity, and further comprising an amorphous medium with discrete acoustic reflectors. Such an "array of arrays" provides additional benefits, as individual driver electronic may be provided for each "mini-array", with each "mini-array" as described above e.g. in an acoustic resonance cavity comprising an amorphous medium with discrete acoustic reflectors. The only information which may therefore be provided for each array is a direction of energy and a strength. This is generally less information than a signal waveform being provided for each element in the array.

In a set of embodiments, each cavity in the plurality of cavities is coupled to a solid substrate. In an alternative set of embodiments, each cavity in the plurality of cavities is arranged on a common damping medium. In a further alternative set of embodiments, each cavity in the plurality of cavities is arranged within a common damping medium. The damping medium may be an amorphous material, a semi-solid material, an acoustic dielectric material, or a gel, amongst others.

The "array of arrays" also reduces the density of PMUTs in the overall array, such that cross-talk may also be more easily reduced since each "mini-array" may be insulated from the other. Having an "array of arrays" reduces overall PMUT density as the number of PMUTs is reduced compared to a single array, where every PMUT is spaced by $\lambda/2$, as the arrays do not need to be spaced this closely. For example, the arrays coupled to a solid substrate may each be mounted on a "pillar" so that they are separated from the solid substrate which connects them, and hence energy does not propagate between the arrays. Alternatively, the medium on which the PMUTs may be arranged may be a foam with minimal acoustic transmission capabilities.

According to a further aspect of the present invention, there is provided an arrangement comprising a plurality of PMUTs arranged to interface with respective acoustic tubes, the PMUTs being arranged in a tessellated array.

In any of the PMUT arrays described above, in a set of embodiments, the array is mounted so as to be moveable by an actuator - e.g. a motor which moves the array. Similarly to the actuator described above which moves the PMUT, this actuator may be used to change the position of the array to learn directional impulse responses in different directions.

In any of the arrays described above, the array may be 3D i.e. not flat. A 3D array structure may allow for more acoustic output energy over a surface, as each PMUT transmitter produces a signal which sums with the signal from other transmitters.

Additionally, different PMUTs in the array may be of different sizes, therefore each having individual, different resonant frequencies.

For example, if the properties of the acoustic resonance cavity or medium which interfaces with the PMUT array is adjusted, the motor may be used to "learn" how this shaping affects the array acoustic response, with this information then further used during transmission for better focusing of the ultrasonic signal as the effect of the adjusted cavity on the transmitted signal will have been learnt.

In a set of embodiments an input power signal is provided to each array and further information such as signal direction/pattern, strength and calibration information is provided wirelessly such that the multiple arrays provide a sensor network.

Reflected signals received at the PMUT array(s) may undergo signal processing, e.g. using any suitable image reconstruction techniques to produce an image. The signal processing preferably comprises beamforming and may be performed in the digital domain. The signal processing may be performed using any suitable processor(s).

In accordance with a third aspect of the invention, there is provided a method of imaging using a PMUT or PMUT array, comprising:

determining an acoustic transfer function corresponding to the acoustic effect of a plurality of discrete reflectors positioned between the PMUT or PMUT array and a scene to be imaged;
imaging the scene using the PMUT or PMUT array by transmitting an ultrasonic signal and receiving the ultrasonic signal at the PMUT or PMUT array, after it has undergone one or more reflections;
processing the received ultrasonic signal to generate an image by applying the inverse of the acoustic transfer function to the received ultrasonic signals.

In some embodiments, the method is applied to a PMUT array comprising a plurality of PMUTs according to the second aspect of the invention. In a set of embodiments, the plurality of the PMUTs are arranged in a tessellated array.

It will be appreciated by those skilled in the art that the acoustic transfer function is a mathematical function of the effect of the plurality of discrete reflectors on an image generated by the PMUT or PMUT array. A clearer image may be formed by using a determined acoustic transfer function when processing the received signal. As indicated above, the PMUT or PMUT array may have a wider field of view because of the presence of the discrete reflectors, e.g. in front of the PMUT. Thus, the method provides imaging which achieves a wider field of view without sacrificing image quality.

The acoustic transfer function may be determined in various ways. The acoustic transfer function may be predetermined and stored in a memory of a processor. In a set of embodiments, the acoustic transfer function is determined using an iterative algorithm, e.g. and stored in a memory of a processor.

The acoustic transfer function may comprise a directional filter, e.g. a directional impulse response.

In a set of embodiments, the determining step of the third aspect is achieved by a method comprising:

(a) selecting an acoustic transfer function for applying to a received signal for generating an image;
(b) imaging using a PMUT or PMUT array by transmitting an ultrasonic signal and receiving the ultrasonic signal at the PMUT or PMUT array, after it has undergone one or more reflections;
(c) using the inverse of the acoustic transfer function to process the received signal to generate an image;
(d) determining a sharpness parameter of the image and when the determined sharpness parameter is:

(i) not above a predetermined threshold, adjusting the transfer function before repeating steps (b)-(d);
(i) above a predetermined threshold, terminating the method.

According to a further aspect, the invention provides a method of determining an acoustic transfer function for imaging using a PMUT or PMUT array, comprising:

(a) selecting an acoustic transfer function for applying to a received signal for generating an image;
(b) imaging using a PMUT or PMUT array by transmitting an ultrasonic signal and receiving the ultrasonic signal at the PMUT or PMUT array, after it has undergone one or more reflections;
(c) using the inverse of the acoustic transfer function to process the received signal to generate an image;
(d) determining a sharpness parameter of the image and when the determined sharpness parameter is:

(i) not above a predetermined threshold, adjusting the transfer function before repeating steps (b)-(d);
(i) above a predetermined threshold, terminating the method.

Thus, the method may allow an acoustic transfer function to be effectively 'tuned' to improve the quality of an image which is obtained using the plurality of discrete reflectors. For example, if the "wrong" acoustic transfer function is selected, then the image obtained from the ultrasonic imaging will almost always be "smeared out". Sharpness of the image may therefore be used as a criterion in order to update the acoustic transfer functions which are selected to obtain the image.

The sharpness parameter may be a measure such as image sharpness, see https://ieeexplore.ieee.org/document/6783859. Alternatively, the ratio between low reflector values (close to 0) and high reflective values may be used to compute the sharpness parameter.

The acoustic transfer function may be adjusted using past acoustic transfer functions stored in a memory, for example in a server.

Features of any aspect or embodiment described herein may, wherever appropriate, be applied to any other aspect or embodiment described herein. Where reference is made to different embodiments or sets of embodiments, it should be understood that these are not necessarily distinct but may overlap.

Certain embodiments of the invention will now be described, by way of example only, with reference to the accompanying drawings in which:

Figure 1 is a view of a PMUT in accordance with a first embodiment of the invention;
Figure 2A is a view of a PMUT in accordance with a second embodiment of the present invention;
Figure 2B is a further view of a PMUT in accordance with a second embodiment of the present invention;
Figure 3 is a view of a PMUT in accordance with a third embodiment of the invention;
Figure 4A shows the PMUT of Figure 1 with a transmitted chirp signal with a first cavity volume;
Figure 4B shows the PMUT of Figure 1 with a transmitted chirp signal with a second cavity volume;
Figure 5A shows a plurality of PMUTs arranged in a tessellated array and interfacing with an amorphous medium comprising random reflectors;
Figure 5B shows a plurality of PMUTs arranged in a tessellated array and interfacing with an amorphous medium comprising regularly spaced reflectors;
Figure 6A shows a plurality of PMUTs arranged in a tessellated array within an acoustic resonance cavity and interfacing with an amorphous medium comprising random reflectors;
Figure 6B shows a plurality of PMUTs arranged in a tessellated array within an acoustic resonance cavity and interfacing with an amorphous medium comprising regularly spaced reflectors;
Figure 7A shows a plurality of PMUTs arranged in a tessellated array and interfacing with an amorphous medium comprising randomly moving reflectors;
Figure 7B shows a plurality of PMUTs arranged in a tessellated array interfacing with an amorphous medium comprising regularly spaced reflectors which are moved to adjust the properties of the medium;
Figure 8A shows the PMUT array and cavity of Figure 6B, along with a diagram of the acoustic transfer function used to model the effect of the reflectors;

Figure 8B shows the PMUT array of Figure 8B along with a diagram of the modified acoustic transfer functions;

Figure 9 shows the array of PMUTs in Figure 6B being used to image a known object;

Figure 10 shows a single transmitter and single receiver being used to image a single reflector;

Figure 11 shows a PMUT array interfacing with a cavity larger than the PMUT array;

Figure 12A shows an array of arrays coupled to a solid substrate;

Figure 12B shows an array of arrays arranged on a medium;

Figure 12C shows an array of arrays arranged within a medium;

Figure 13 shows the array of arrays of Figure 12A in use imaging an object;

Figure 14 shows a non-planar PMUT array;

Figure 15 shows an array of arrays, where each array interfaces with acoustic ports;

Figure 16A shows a PMUT array arranged in a stack with multiple layers with different impedance arranged in front of the PMUT array;

Figure 16B is an exploded view of Figure 16A;

Figure 16C show the force applied by the piezoelectric strips shown in Figure 16A;

Figure 16D shows the deformation of the layers caused by the forces shown in Figure 16D;

Figure 17 is a flowchart illustrating a method of updating the directional impulse responses to improve the quality of an image which is obtained;

Figure 18 shows a three-dimensional representation of the embodiment shown in Figure 5A;

Figure 19 shows a three-dimensional representation of a variant of the embodiment shown in Figure 5A;

Figure 20 shows a series of plots demonstrating how the frequency responses of the PMUT and housing can affect an outgoing signal.

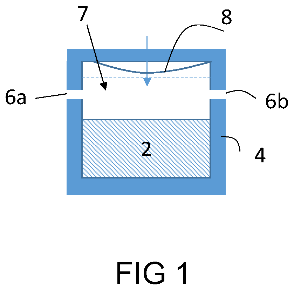

Figure 1 shows a highly schematic view of a PMUT 2 arranged within an acoustic resonance cavity 4 in accordance with an embodiment of the invention. The acoustic resonance cavity 4 has two openings 6a, 6b, through which an ultrasonic signal may be transmitted or received. The acoustic resonance volume 7 of the cavity 4 is adjustable using a deformable diaphragm 8.

The deformable diaphragm 8 may be fabricated from any suitable material, such as a piezoelectric material. A piezoelectric material will deform when a voltage is applied, with the degree of deformation varying depending on the voltage which is applied, as well as the material which is used. Common piezoelectric materials include PZT (lead-zirconate-titanate), KNN ((K,Na)NbO3), ZnO (zinc oxide), BaTiO3 (Barium titanate), PMN-PT (Pb(Mg1/3Nb2/3)O3-PbTiO3), and aluminium nitride (AIN). The deformable diaphragm will be mounted to the inside of the top of the cavity 4, and bonded to the edges of the cavity 4 such that when a voltage is applied, the edges of the diaphragm 8 do not move but the unfastened centre of the diaphragm 8 deforms, reducing the volume 7 within the cavity. A controllable drive voltage is therefore provided to the diaphragm 8 such that the volume 7 of the cavity 4 can be adjusted.

The position and/or shape of the deformable diaphragm 8 may be adjusted, and through this adjustment, the resonance volume of the cavity 4 may therefore be adjusted. The acoustic resonance cavity may be a Helmholtz resonator.

The PMUT 2 may be either an ultrasonic transmitter, an ultrasonic receiver, or both.

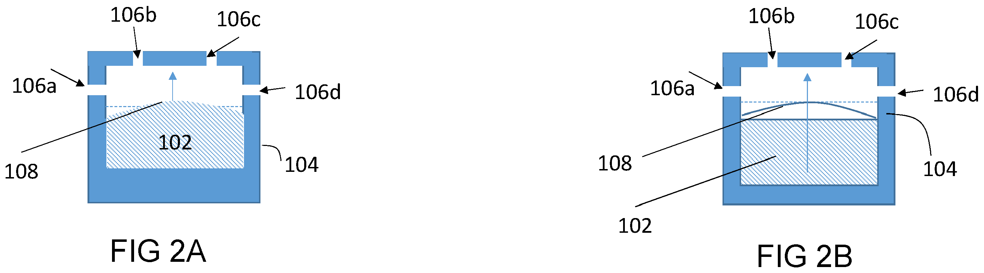

Figures 2A and 2B shows a highly schematic view of a PMUT 102 arranged within an acoustic resonance cavity 104 in accordance with a second embodiment of the present invention. The embodiment shown in Figures 2A and 2B has four openings, 106a-d through which an ultrasonic signal may be transmitted or received. As with the embodiment of Figure 1, the PMUT 102 may be either a transmitter, receiver, or both.

The volume of the acoustic resonance cavity 104 is adjustable. The acoustic resonance cavity 104 comprises a deformable diaphragm 108 which the PMUT 102 is arranged on. The position or shape of the diaphragm 108, and therefore the PMUT 102 may be adjusted to change the volume of the acoustic resonance cavity 104.

In Figure 2A, the diaphragm 108 is shown in a deformed position, reducing the volume within the cavity 104. The diaphragm 108 in Figure 2B is shown in the relaxed position, with the arrow indicating the possible upward deformation of the diaphragm 108 and PMUT 102 as shown in Figure 2A.

If the PMUTs 2, 102 shown in Figures 1, 2A and 2B are used for transmitting an ultrasonic signal, the acoustic resonance volume of the cavity 4, 104 may be adjusted to match the outgoing frequency of the transmitted ultrasonic signal. This is particularly relevant when using a PMUT 2, 102 to create a varying frequency signal. If the PMUT 2, 102 is transmitting at a different frequency to the resonant frequency of the cavity 4, 104, then a varying frequency transmission signal may be achieved more easily than from a non-adjustable cavity. The system may transmit a chirp (e.g. a continuously increasing/decreasing frequency transmission) from frequency F0 to F1 through adjustment of the volume of the acoustic resonance cavities 4, 104. Therefore, a flatter output spectrum may be achieved over the frequency range F0 to F1 without any adjustment of the input energy such that the transmitted signal may have a high output energy and may be used e.g. for applications which require a large range or good SNR.

If the PMUTs 2, 102 shown in Figures 1, 2A and 2B are used for reception of a reflected chirp, any frequency may be received at any time, as a result of echoes from objects at different distances resulting from the outgoing chirp signal. If the imprecise distance to the reflective object of interest is known, the rough expected time of the reflected echo is also known. The volume of the cavity 4, 104 may therefore be adjusted at this time in order to amplify the incoming signal at the point when it is expected to arrive, therefore resulting in better signal reception.

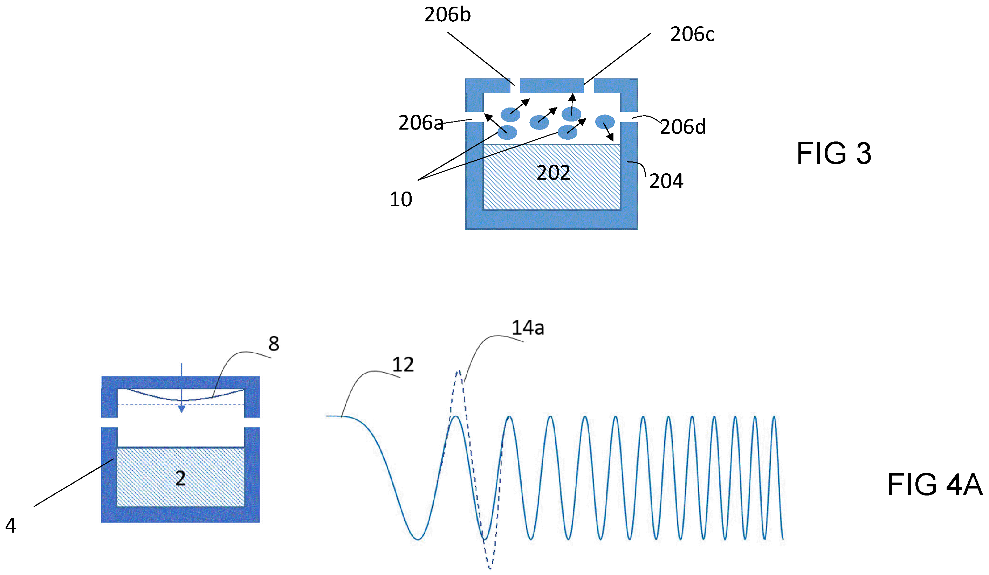

Figure 3 shows a highly schematic view of a PMUT 202 arranged within an acoustic resonance cavity 204 in accordance with a third embodiment of the present invention. As with the embodiment shown in Figures 2A and 2B, the acoustic resonance cavity 204 has four openings 206a-d. Also within the acoustic resonance cavity 204 is an amorphous medium comprising a plurality of discrete reflectors 10. The reflectors 10 may be adjusted in use, for example the position of the reflectors 10 may be adjusted in order to adjust the acoustic properties of the acoustic resonance cavity 204.

For example, the amorphous medium may be a gel, with the reflectors 10 comprising small magnetised metallic balls embedded in the gel. A controllable magnetic field (not-shown) may then be applied to the cavity 204, resulting in the positions of the reflectors 10 changing. Additionally, the density of the medium may be altered through movement of the metallic balls due to the application of the magnetic field. In this way, the gel may act like a spring, compressing when the reflectors experience a force due to the magnetic field and expanding when the force is removed. For example, if the magnetic field is used to aggregate the metallic balls very tightly in front of the PMUT, then the density will be increased, whereas if the metallic balls are evenly spread throughout the medium, the density of the medium "in front" of the PMUT will be reduced. Changing the density of the medium can change the local speed of sound, which may be further used to create a lens effect for a transmitted ultrasonic signal.

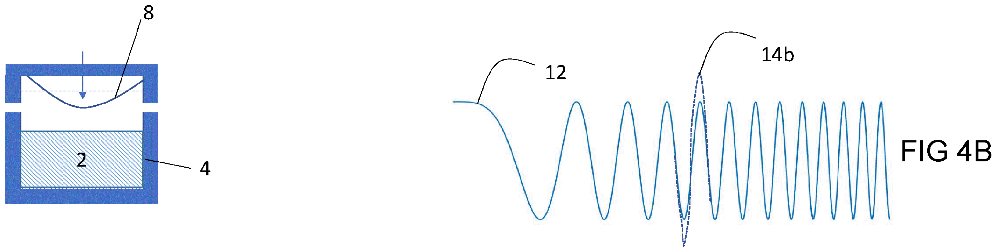

Figures 4A and 4B show the PMUT 2 and acoustic resonance cavity 4 of Figure 1 along with a transmitted chirp signal 12. In Figure 4A, the diaphragm 8 is only slightly deformed, and therefore the volume of the acoustic resonance cavity 4 is relatively large. As a result, the resonant frequency 14a of the cavity 4 is a low frequency, shown with a frequency similar to that of the beginning of the chirp signal 12.

By contrast, in Figure 4B, the diaphragm 8 has been deformed further, therefore reducing the volume of the acoustic resonance cavity 4 compared to that of Figure 4A. As a result, the resonant frequency 14b of the cavity 4 is at a higher frequency than the resonant frequency 14a shown in Figure 4A due to the reduce volume of the resonant cavity 4 in Figure 4B.

Figures 4A and 4B therefore show how through adjusting the volume of the acoustic resonance cavity 4, the resonant frequency of the cavity 4 may also be adjusted. Therefore, when the PMUT 2 is transmitting a chirp signal, the volume of the acoustic resonance cavity 4 may be continually adjusted using the adjustable diaphragm 8 during the transmission of the chirp signal 12. The resonant frequency of the cavity 4 may therefore match the transmitted frequency, such that a relatively flat spectrum is output with a high overall energy such that the chirp signal may be used for imaging applications requiring range or good SNR. For example, super-resolution imaging methods generally rely on high SNR, see e.g. Christensen-Jeffries, K. et al., "Super-resolution ultrasound imaging", Ultrasound in Medicine & Biology, 2020, 46(4), 865-891. A better SNR leads to better ultrasound detection, and better effective beamforming in array beamforming applications. In addition to this, a sufficiently sensitive ultrasonic receiver with a good SNR drives down the need for excessive output power (i.e. there is less need for a strong signal to improve the SNR) and use excessive power in the device.

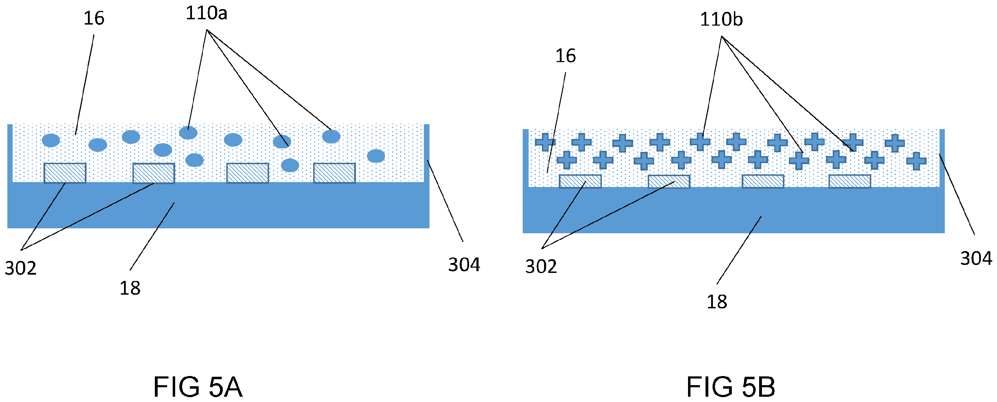

Figures 5A and 5B show an embodiment of another aspect of the invention comprising a plurality of PMUTs 302 arranged in a tessellated array. The array of PMUTs 302 are arranged to interface with a cavity 304. The cavity 304 comprises a non-reflective amorphous medium 16 comprising a plurality of discrete reflectors 110. The array of PMUTs 302 are coupled to a solid substrate 18, with the amorphous medium 16 and reflectors 110a, 110b extending between each of the PMUTs 302 in the array.

The reflectors 110a, 110b may be randomly spaced throughout the amorphous medium 16, as shown with the reflectors 110a in Figure 5A, or they may be arranged in a regular pattern, as shown with the reflectors 110b in Figure 5B.

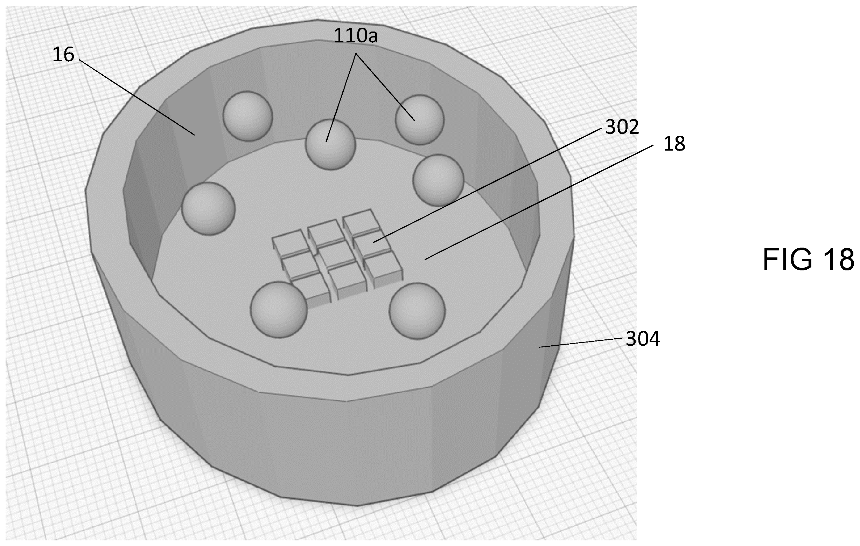

A three-dimensional representation of the embodiment shown in Figure 5A is shown in Figure 18. Figure 18 shows the PMUT array 302, the substrate 18 and the amorphous medium 16 comprising random reflectors 110a.

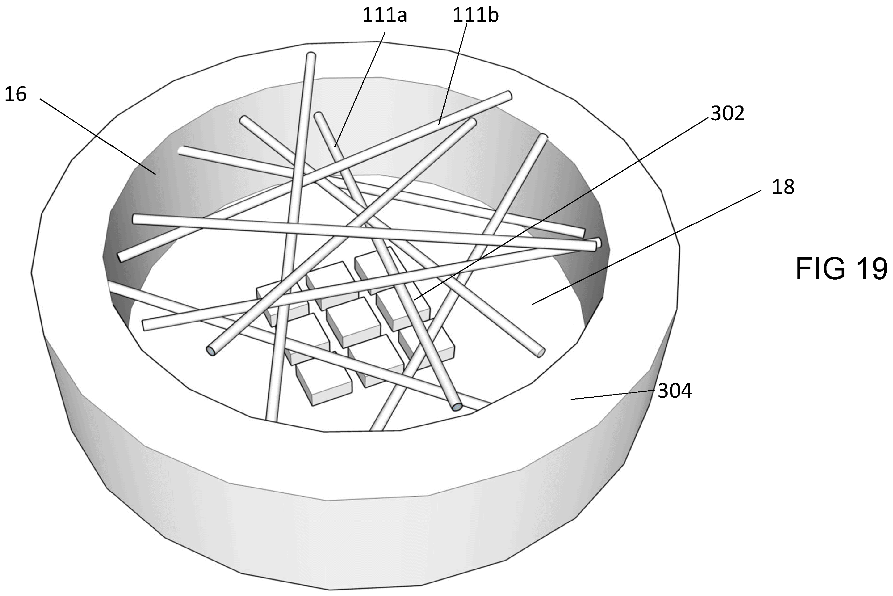

Figure 19 shows a variant of the embodiment shown in Figure 18. Figure 19 shows the PMUT array 302, the substrate 18 and the amorphous medium 16 as shown in Figure 18, with random reflectors in the form of overlapping fibres 111a, 111b which form an irregular structure, i.e. a network or 'mesh' of discrete fibre reflectors 111a, 111b. As can be seen from Figure 19, the mesh has a number of holes to allow signals to pass through the amorphous medium 16. The beam-spreading effect provided by the mesh of Figure 19 helps to increase the field of view of the PMUT array 302, which allows more information to be captured when imaging using the PMUT array 302.

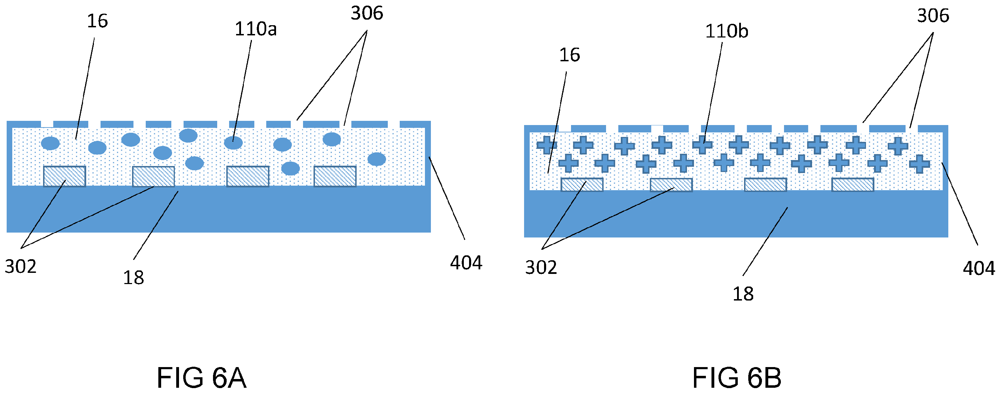

Figures 6A and 6B show an array of PMUTs 302, similar to those shown in Figures 5A and 5B, however the cavity 404 extends over the amorphous medium 16 and reflectors 110a, 110b, with acoustically transparent openings 306 through which an ultrasonic signal may be transmitted or received.

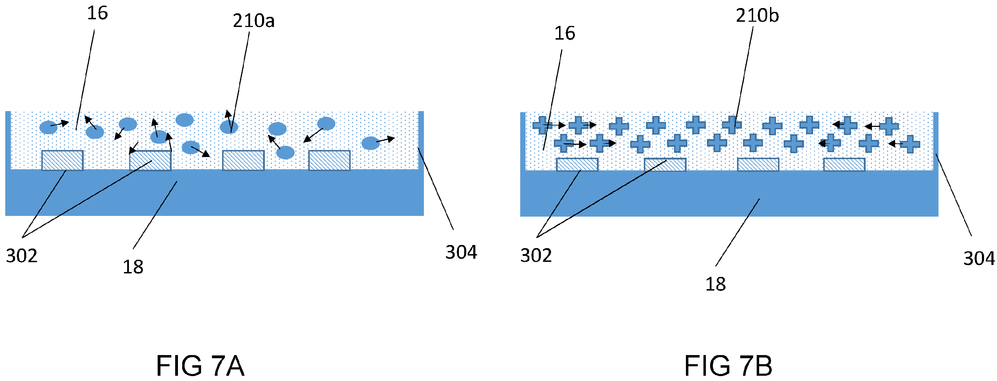

Figures 7A and 7B show an array of PMUTs 302 similar to those shown in Figures 5A-6B and arranged to interface with a cavity 304.

Figure 7A shows the discrete reflectors 210a which are free to move throughout the amorphous medium 16. For example, the discrete reflectors 210a may be moved e.g. by mutual induction from an external magnetic field if they are metallic.

Figure 7B shows the discrete reflectors 210b arranged in a regular pattern throughout the amorphous medium 16. The cavity 304 may be circular, and an external inwards force may be applied to the external edge of the cavity 304 to compress it. As shown in Figure 7B, this can cause an inwards motion of the peripheral reflectors 210b. This can have the effect of "shaping" the volume of the cavity 304. For example, a piezoelectric material (not shown) may surround the cavity 304. When voltage is applied, the piezoelectric material - e.g. in the form of a strip - contracts so that the cavity 304 is compressed, and the medium 16 is therefore compressed as well. This has the effect of moving the reflectors 210b inwards, creating a "lens" effect.

In the arrays shown in Figures 5A-7B, the individual PMUTs may be spaced such that in operation, the ultrasonic array of PMUTs 302 emits a steered ultrasonic beam. Determined phase adjustments may be applied to the signals from respective transmitters or receivers to allow them to act as a coherent array - e.g. for beamforming. Beam steering may be used on either the transmitted ultrasonic signal, reflected ultrasonic signal, or both. In order to steer the transmitted ultrasonic signal, the determined phase adjustments may be added to the signal transmitted by each PMUT 302 in the array such that the resultant transmitted ultrasonic signals undergo interference, resulting in an overall signal which is transmitted in the desired direction. The received, reflected ultrasonic signal may be steered in a similar way. Determined phase adjustments may be applied to the received signals from all directions to determine the reflected signal from a single direction in the surrounding structure.

Most standard beamforming algorithms benefit from half wavelength spacing of the PMUTs 302 as this enables each incoming wave front to be discernible from other incoming wave fronts with a different angle or wavenumber, in turn preventing the problem of 'grating lobes'. Classical beamforming methods that benefit from half wavelength (or tighter) spacing includes (weighted) delay-and-sum beam formers, adaptive beam formers such as MVDR/Capon, direction-finding methods like MUSIC and ESPRIT and Blind Source Estimation approaches like DUET, as well as wireless communication methods, ultrasonic imaging methods with additional constraints such as entropy or information maximisation.

Altering the position of the reflectors 210a, 210b may be used to "steer" a transmitted or received ultrasonic signal through the cavity 304. In order to achieve high quality signal transmission and reception, it is often desirable to move the positions of the PMUTs 302 during transmission and recording, however this is often impractical. Adjusting the properties of the medium 16 through which the signal is transmitted or received by adjusting the position of the reflectors 210a, 210b has the same net effect as adjusting the positions of the PMUTs 302 themselves.

When transmitting varying frequency signals, a typical shortcoming in array design is that the position of the PMUT elements 302 is optimal for one frequency only, typically the centre frequency of the broadband signal, such that the PMUTs 302 have a half wavelength spacing of the centre frequency. The PMUT spacing may therefore not be optimal for other frequencies in the broadband signal. In accordance with the present invention, when transmitting a chirp signal from F0 to **F1,** the position of the reflectors 210a, 210b is adjusted within the medium such that at any given time, the PMUTs 302 are "spaced" at a half wavelength relative to the current frequency. Better imaging capabilities may therefore be achieved at all frequencies through adjustment of the reflectors 210a, 210b. Modifying the positions of the reflectors 210a, 210b in front of the array of PMUTs 302 may create a lens effect. Having a half wavelength spacing allows relatively simple beamforming methods to be used easily. On the transmission side, it is beneficial to have half wavelength spacing because it directly determines to what extent "leakage" of a focussed beam into other non-intended directions can be prevented. On the receive side the problem is typically slightly better posed, particularly when working in air where there is typically a lot of "space" and some sharp reflectors (in contrast with e.g. medical imaging, where everything is on a continuous spectrum).

If the elements are not $\lambda/2$ spaced on the receive array processing side a combination of two aspects can be utilized: (a) that the scene is typically relatively sparse and (b) that the so-called "grating lobes" occur at different angles for different frequencies. Therefore, using broadband signals may help to reduce the need for $\lambda/2$ spacing.

Using a broadband signal, multiple frequencies can be matched up and used as a sort of 'protection against each other's mistakes'. To be specific, assume an array is sampled at less than $\lambda_1/2$ at a specific wavelength $\lambda_1$. This array will have a grating lobe at a certain angle $\beta$ relative to the main beam at angle $\alpha$. It means that on observing an object, it cannot be said with certainty whether the reflector lies at angle $\alpha$ or angle $\beta$ - because incoming waves from those two angles look exactly the same at the array sensors.

This is a result of spatial under-sampling, which is a similar phenomenon to aliasing in time-domain signal processing. However, if we also consider another wavelength $\lambda_2$, and consider the same main beam at angle $\alpha$ - then the associated grating lobe is now typically at a different angle $\Omega$.

If the object was at angle $\beta$, then, for the second wavelength $\lambda_2$, the response both in the direction of $\alpha$ and/or $\Omega$ (the two can't be disambiguated) will be low. If not, the object was likely located at angle $\alpha$. The same logic can be used to discern multiple objects at multiple angles up to a certain point, where there are points virtually everywhere, and where the scene is no longer sufficiently sparse to utilize this broadband-inherited possibility. In practice, compressed-sensing methods will take advantage of these broadband capabilities in the presence of sparse scenes with under-sampled arrays, and one typically doesn't have to resort to searches or cancel-one-out approaches like the one outlined above.

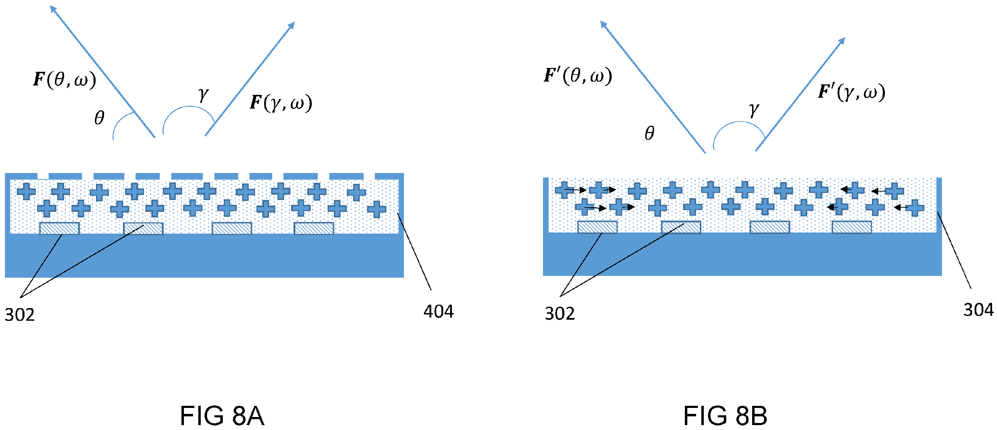

Operation of the embodiments shown in Figs. 5B and 6B will now be described with reference to Figs. 8B and 8A respectively. Figure 8A shows the PMUT array 302 and cavity 404 of Figure 6B, along with a diagram of the transfer functions $F(\theta,\omega)$ and $F(\gamma,\omega)$ which are used to model the expected effect of the reflectors 110 on a transmitted ultrasonic signal such as a chirp. The transfer function is a mathematical function which theoretically models the PMUT array's 302 output as a function of the reflector 110 positions. The PMUT array 302 and cavity 304 of Figure 8B are shown along with a diagram of the modified transfer functions $F'(\theta,\omega)$ and $F'(\gamma,\omega)$ which are modified due to the movement of the reflectors 210b.

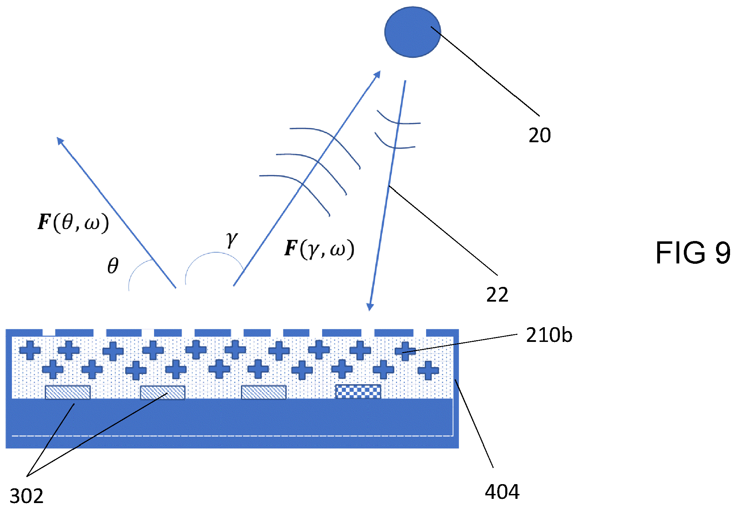

Figure 9 shows the array of PMUTs 302 being used to image a known object 20 in order to accurately model the impulse response of transmitted signals. The object 20 may also be an active element instead of a passive reflector, such as a microphone such that it emits its own signal 22.

The equations below provide further detail on the processing performed in order to image using the PMUTs described above. This processing may be performed using any suitable processor.

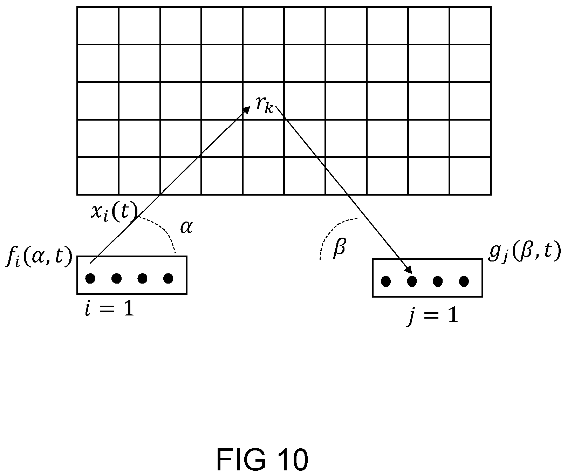

Firstly, consider the hypothetical and simplified scenario shown in Figure 10 where there is a single reflector, a transmitter and a receiver. Then, assuming a bandlimited Dirac pulse transmitted from the transmitter $\delta(t)$, the received signal is:

$$y_j(t) = x_i(t) * f_i(\alpha,t) * r_k\, \partial\big(t - \tau_{ijk}\big) * g_j(\beta,t)$$

$x_i(t)$ is the transmitted signal, $r_k\, \partial\big(t - \tau_{ijk}\big)$ is the reflected signal, $f_i(\alpha,t)$ is a filter applied to the transmitted signal and $g_j(\beta,t)$ is a filter applied to the received signal.

Then, for a single transmitter, single receiver and multiple reflectors, the received signal is:

$$y_j(t) = \sum_{k=1}^{K} x_i(t) * f_i(\alpha,t) * r_k\, \partial\big(t - \tau_{ijk}\big) * g_j(\beta,t)$$

Where the received signal $r_k$ is summed over all the reflectors k.

For multiple transmitters, a single receiver, and multiple reflectors, the received signal is:

$$y_j(t) = \sum_{i=1}^{I}\sum_{k=1}^{K} x_i(t) * f_i(\alpha,t) * r_k\, \partial\big(t - \tau_{ijk}\big) * g_j(\beta,t)$$

Where the transmitted signal $x_i(t)$ is summed over all the transmitters i and the received signal $r_k$ is summed over all the reflectors k.

When an array of PMUTs is used for both transmission and reception of the ultrasonic signal, the received signals $r_k$ are minimised, and real data $y_j(t_s)$ is input to the processor, along with the estimated image data $\hat{y}_j(t_s)$.

$$\min_{\{r_k\}} \sum_{s=1}^{S}\; \sum_{j=1}^{J} \big\|y_j(t_s) - \hat{y}_j(t_s)\big\|_2^2$$

The reflections are calculated to learn the directional filters $F,\ G$ with a focus on image quality:

$$\min_{\{r,F,G\}} \sum_{s=1}^{S}\; \sum_{j=1}^{J} \big\|y_j(t_s) - \hat{y}_j(t_s)\big\|_2^2 + contrast(r)$$

$r = \{r_k\}$
$F = \{f_i(\alpha_a,\beta_b)\}$
$G = \{g_i(\alpha_a,\beta_b)\}$

This is then further improved by adding additional limitations relating to the transfer functions F and G, as shown below:

$$min_{\{r,F,G\}} \sum_{s=1}^{S} \square \sum_{j=1}^{J} \left\|y_j(t_s) - \hat{y}_j(t_s)\right\|_2^2 + contrast(\boldsymbol{r}) + continuity(\boldsymbol{F}) + continuity(\boldsymbol{G})$$

Then for learning F and G over multiple scenes $\boldsymbol{R} = \{r_k\}$

$$min_{\{R,F,G\}} \sum_{p=1}^{P} \square \sum_{s=1}^{S} \square \sum_{j=1}^{J} \left\|y_j(t_s) - \hat{y}_j(t_s)\right\|_2^2 + contrast(\boldsymbol{r}_p) + continuity(\boldsymbol{F}) + continuity(\boldsymbol{G})$$

This is therefore blind learning of the array impulse response over multiple scenes.

The *contrast*($r_p$) can be computed as the L1 norm of the vector *r*, or alternatively as the L1 norm in some transformed domain *Br*, where B can contain codebook vectors representing information relevant for a certain type of information relevant to the acoustic scene, such as edge filters in the depth or angular directions. It could also be related to a distribution of the coefficients in *r*, such as rewarding many zeros and a few positive coefficients. Or it could be the L0 norm of *r*, or any other compressed-sending like- or sparsity based approach, Bayesian, linear programming based or other.

The component *continuity*(*F*) could be a measurement on the rate of change between acoustic transfer functions that represent closely spaced angles. If $f_i, f_j$ are vectors of the matrix F representing direction impulse responses in direction I,j, then:

$$continuity(\boldsymbol{F}) = \sum_{(i,j)\epsilon S} \frac{\left\|f_j - f_j\right\|^2}{d(i,j)}$$

Where d(i,j) is a measure of the distances in angle between the impulse responses $f_i, f_j$ represent. S is a set of all pairs of relevant angles to consider.

The calculations set out above are relevant for standard ultrasound imaging with known directional filters *F, G* and known reflectors *r*.

The following calculations include modifications to the calculations shown above for when there are changes in the "medium" in front of the PMUTs which are being used for imaging. Examples of these changes are a change in the volume of an acoustic resonance cavity, or a change in the positions of the reflectors which changes the density of the medium in front of the PMUT.

For multiple transmitters, a single receiver, and multiple reflectors, the received signal is now:

$$\hat{y}_j(t, \boldsymbol{w}) = \sum_{i=1}^{I} \sum_{k=1}^{K} x_i(t) * f_i(\alpha, t, \boldsymbol{w}) * r_k \, \partial\big(t - \tau_{ijk}\big) * g_j(\beta, t, \boldsymbol{w})$$

Where the transmitted signal $x_i(t)$ is summed over all the transmitters i and the received signal $r_k$ is summed over all the reflectors *k*. The directional filters $f_i, g_j$ are further dependent on a state vector w as well as the angles $\alpha$, $\beta$, and the time dependency t.

The received signals $r_k$ are minimised, and real data $y_j(t_s)$ is input to the processor, along with the estimated image data $\hat{y}_j(t_s, \boldsymbol{w})$, which is now also dependent on the state vector w.

$$min_{\{r_k\}} \sum_{s=1}^{S} \square \sum_{j=1}^{J} \left\|y_j(t_s) - \hat{y}_j(t_s, \boldsymbol{w})\right\|_2^2$$

As before, the reflections are calculated to learn the directional filters *F, G* with a focus on image quality:

$$min_{\{r,F,G\}} \sum_{s=1}^{S} \square \sum_{j=1}^{J} \left\| y_j(t_s) - \hat{y}_j(t_s, \boldsymbol{w}) \right\|_2^2 + contrast(\boldsymbol{r})$$

As set out in the equations below, the transfer functions F and G are also dependent on the state vector w which provides information relating to the change in the medium in front of the PMUT which is being used for transmission or reception of the ultrasonic signal.

$$\boldsymbol{r} = \{r_k\}$$

$$\boldsymbol{F} = \{f_i(\alpha_a, \beta_b, \boldsymbol{w})\}$$

$$\boldsymbol{G} = \{g_i(\alpha_a, \beta_b, \boldsymbol{w})\}$$

This is then further improved by adding additional limitations relating to the transfer functions F and G, which are now also dependent on the state vector w as shown below, and utilising the knowledge that the transfer functions F and G change gradually with a change in angle:

$$min_{\{r,F,G\}} \sum_{s=1}^{S} \square \sum_{j=1}^{J} \left\| y_j(t_s) - \hat{y}_j(t_s, \boldsymbol{w}) \right\|_2^2 + contrast(\boldsymbol{r}) + continuity(\boldsymbol{F}) + continuity(\boldsymbol{G})$$

Then for learning F and G over multiple scenes $\boldsymbol{R} = \{r_k\}$:

$$min_{\{R,F,G\}} \sum_{p=1}^{P} \sum_{s=1}^{S} \square \sum_{j=1}^{J} \left\| y_j(t_s) - \hat{y}_j(t_s, \boldsymbol{w}) \right\|_2^2 + contrast(\boldsymbol{r}_p) + continuity(\boldsymbol{F}) + continuity(\boldsymbol{G})$$

Turning back to the equation for the received signal:

$$\hat{y}_j(t, \boldsymbol{w}) = \sum_{i=1}^{I} \sum_{k=1}^{K} x_i(t) * f_i(\alpha, t, \boldsymbol{w}) * r_k \, \partial(t - \tau_{ijk}) * g_j(\beta, t, \boldsymbol{w})$$

The angles ($\alpha$, $\beta$) are not needed as explicit parameters as they can be computed based on knowledge of the location of the reflector whose reflective strength is $r_k$.
The equation can therefore be simplified to:

$$\hat{y}_j(t, \boldsymbol{w}) = \sum_{i=1}^{I} \sum_{k=1}^{K} f_{ij}(t, \boldsymbol{w}, \boldsymbol{x}) \cdot r_k$$

Where $\boldsymbol{x} = \{x_1(t), x_2(t), ...\}$ is a family of driver signal functions.
This may be further simplified using a driver signal matrix:

$$\boldsymbol{X} = \begin{bmatrix} x_1(t_1) & ... & x_I(t_1) \\ x_1(t_2) & \square & x_I(t_2) \\ \vdots & ... & \vdots \end{bmatrix}$$

The received signal equation therefore becomes:

$$\hat{y}_j(\boldsymbol{w}, \boldsymbol{X}) = \sum_{i=1}^{I} \sum_{k=1}^{K} \boldsymbol{F}_{ij}(\boldsymbol{w}, \boldsymbol{X}) \cdot r_k$$

A vector of reflection coefficients which provides information of the "image" produced during the imaging process can be determined:

$$r = \begin{bmatrix} r_1 \\ r_2 \\ \vdots \end{bmatrix}$$

The received signal equation may therefore be further simplified as shown below:

$$\hat{y}_j(w,X) = \sum_{i=1}^{I}\sum_{k=1}^{K} F_{ij}(w,X)\, r_k = \sum_{i=1}^{I} F_{ij}(w,X)\, r = 1^T F_{ij}(w,X) r$$

$$\hat{y}_j(w,X) = 1^T F_{ij}(w,X) r = f_j(w,X) r$$

$$\hat{y}(w,X) = \begin{bmatrix} \hat{y}_1(w,X) \\ \vdots \\ \hat{y}_J(w,X) \end{bmatrix} = \begin{bmatrix} f_j(w,X) \\ \vdots \\ f_J(w,X) \end{bmatrix} r = F(w,X) r$$

$$\hat{y} = \begin{bmatrix} \hat{y}(w_1,X_1) \\ \hat{y}(w_2,X_2) \\ \vdots \\ \vdots \\ \hat{y}(w_N,X_N) \end{bmatrix} = \begin{bmatrix} F(w_1,X_1) \\ F(w_2,X_2) \\ \vdots \\ \vdots \\ F(w_N,X_N) \end{bmatrix} r + n = Fr + n$$

As the number N is increased, the equation system becomes better conditioned, and therefore the results (images) will also be better.

Increasing N increases the number of ways the signals are transmitted (X), as well as how the aperture is modified (w), such as through adjustment of the acoustic resonance cavity volume or through adjustment of the positions of reflectors in the medium in front of the PMUTs.

Through transmitting the ultrasonic signal through a diverse medium, such as the amorphous medium with reflectors, the equations above may be used to "learn" how the sound is affect by this medium and then use this to steer in sound during both transmission and reception. The output signal at each array element may be preconditioned and the received signals may then be processed and used to obtain an image of the surroundings.

Thus, better images may be obtained by having the reflectors arranged so that they are randomly positioned with respect to each other. This is possible, for example, when the reflectors comprise metallic balls randomly placed within a gel, as shown in Figure 3. This has an analogous effect to capturing images with a camera from many different angles. Having the reflectors positioned randomly and/or moving in many different directions (randomly) allows more information to be determined by the PMUT arrays 302, as if more camera angles were being viewed.

The array of PMUTs 302 may also be mounted on a motor (not shown) and moved during observation of a single (or multiple) reflectors. The directional impulse response may therefore be sampled in all directions. This sampling may occur prior to the PMUT array 302 being used for imaging, e.g. in a test lab setting, or during use, such as when the array 302 is mounted on a robot or other device which can control the physical position and angle of the array 302. This allows the PMUT array 302 to obtain multiple views of its surroundings.

Through modelling the impulse responses of transmitted signals with a known reflector, the effect of position adjustment of the reflectors 210b can be modelled in order to improve imaging.

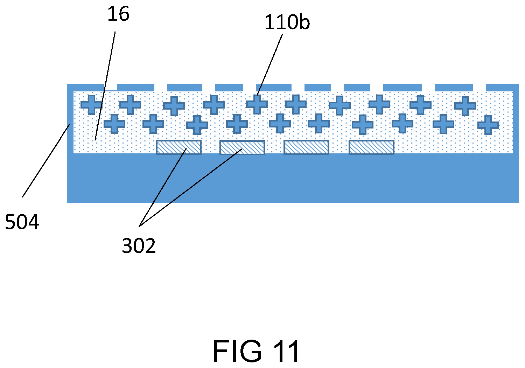

Turning now to Figure 11, a PMUT array 302 is shown which interfaces with a cavity 504. An amorphous medium 16 and reflectors 110b are arranged within the cavity, in front of the PMUT array 302. It is clear that the cavity 504 is much larger than the array 302, unlike the cavities and arrays shown in earlier figures. The larger cavity 504 gives a "larger aperture" for imaging using the PMUT array 302, whilst also reducing costs, which would be much higher if the PMUT array 302 filled the whole of the cavity 504. Having the "larger aperture" ensures that the PMUT array 302 has better near-field focussing capabilities.

In practice, not all frequencies have an optimal beam pattern or focussing, but through utilising all frequencies together (i.e. imaging using multiple frequencies) and through the knowledge that (a) all frequencies reflect similarly to a certain extent, and (b) acoustic scenes in air are often sparse (minimal reflections), good focussing can be achieved at all frequencies.

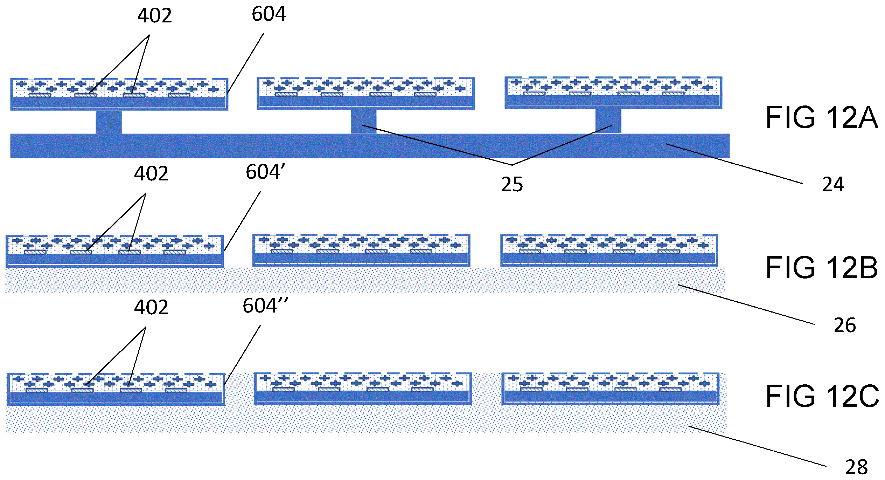

Figures 12A-12C show various configurations of multiple arrays, each of which is similar to those of Figure 6B, such that an "array of arrays" is formed.

Figure 12A shows each array 402 arranged within respective cavities 604. Each cavity 604 is coupled to a solid substrate 24 by a respective pillar 25.

In Figure 12B similar cavities 604' are arranged on a damping medium 26, which may be any suitable damping medium, such as a semi-solid or amorphous medium, a gel, or an acoustic dielectric.

Each array 402 in Figure 12C is arranged within a cavity 604" which is arranged within a damping medium 28, which again may be any suitable damping medium, for example an amorphous medium similar to that within the cavity 604".

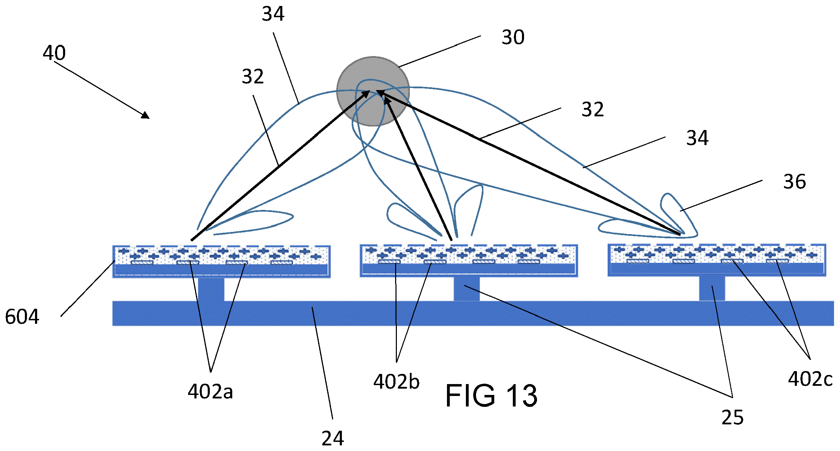

Figure 13 shows the system formed from an array of arrays 40 of Figure 12A being used to image an object 30. The steered ultrasonic signal 32 transmitted from each of the arrays 402a, 402b, 402c is shown, alongside an indication of the width of the emitted ultrasonic signal 34, and also showing the grating lobes 36. Grating lobes 36 are secondary main lobes which occur when using phased arrays (the main lobe being the ultrasonic signal 32). Grating lobes 36 occur when the array spacing is greater than $\lambda/2$, where $\lambda$ is the wavelength of the transmitted ultrasonic signal. The grating lobes 36 spread out from the arrays 402a, 402b, 402c at angles other than the primary path, which is shown by the steered ultrasonic signal 32. The ultrasonic signal 32 is steered and shaped by adding determined phase adjustments to the signal transmitted by each PMUT in each array 402a, 402b, 402c such that the resultant transmitted ultrasonic signals from each PMUT in each PMUT array 402 undergo interference, resulting in the overall steered signal 32 which is transmitted in the desired direction. As is clear in Figure 13, the transmitted signal 32 from each of the arrays 402a, 402b, 402c is steered in different directions towards the object 30 which is being imaged. In this way, the object 30 may be imaged from multiple directions due to the directional signals 32 from the arrays.

In some imaging situations, such as in high-intensity nearfield acoustics (such as object levitation or haptic feedback), it is desirable to have a broad overall array baseline, and have the object of interest near to the surface. This is to be able to focus energy not only in a general direction, but sharply into a "point". It is beneficial to have the energy concentrated to that point and to "fade out" away from that point.

For this, a long array baseline is required. Fabricating a large array of PMUTs is expensive and difficult, as the drive electronics require a large FPGA with many ports.

The system 40 of Figure 13 provides this broad array baseline with additional benefits: individual driver electronics may be provided for each array 402 within the system 40. Each array 402 may be provided with parameters indicating the direction of energy and the strength of the signal which is to be transmitted. Alternatively, in some situations (e.g. multi-touch), a "direction chart" with multiple directions may be included, and the processing needed to create this chart may be carried out at an ASIC at each array 402.

Providing multiple arrays 402 in the system 40 also "thins" the overall array due to the reduced number of PMUTs, which reduces the onset of cross-talk. Each array 402 may be insulated from the other arrays i.e. such that they are not in physical contact with each other such that energy does not propagate between them. Each array 402 may be mounted as in Figure 12A, raised above a substrate 24 with rods 25 such that they are separated from the base substrate 24 which connects them. Alternatively, the arrays 402 may be arranged on a foam medium with minimal acoustic transmission capabilities.

It is also easier to fabricate smaller arrays 402 in a single cavity 604 as opposed to larger array which are more difficult to operate. Larger PMUT arrays may required wire-bonding to each individual element which is difficult to manufacture.

The spacing between the arrays 402 in the system 40 may also be used for placing additional sensors, such as 2D or 3D cameras, providing an additional outlook to the objects which are to be imaged and focused on.

In some embodiments, only power is provided to each array 402. Signal direction/pattern, signal strength and other information for calibration may be provided wirelessly to the arrays 402. The overall system 40 is therefore a sensor network of arrays 402, with an input power supply.

Alternatively, in some embodiments, the additional information may be provided by a wired connection to the system 40.

Each PMUT array 402 interfaces with a cavity 604. D/A converters, and/or A/D converters may also be provided if needed, along with an ASIC and a wireless chip if the signal direction/pattern, signal strength and other information for calibration is provided wirelessly to the array 402.

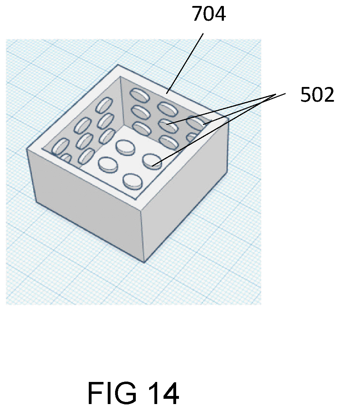

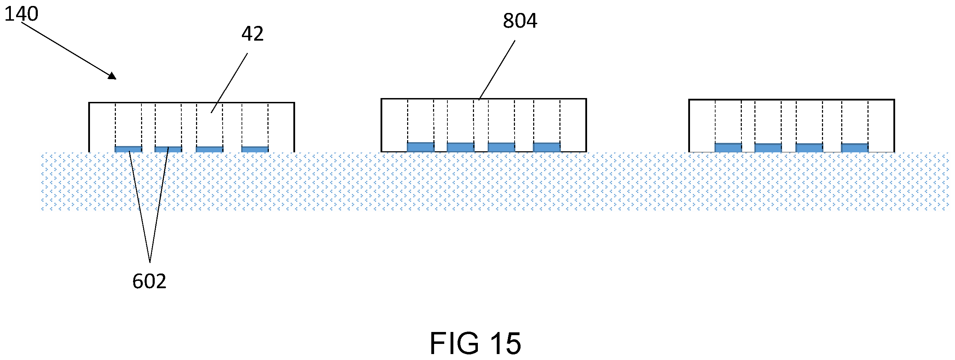

It will be appreciated that the "array of arrays" shown above may comprise any of the arrays or PMUTs shown in any of the Figures, for example, the medium may contain no reflectors. Additionally, the arrays may be non-planar, such as the non-planar array of PMUTs 502 in the cavity 704 shown in Figure 14. Alternatively, as shown in Figure 15, the system 140 may use acoustic tubes/ports 42, with no amorphous medium in the cavities 804 within which are PMUT arrays 602.

However, acoustic tubes 42 may be clogged up with dust, adversely impacting the transmitted ultrasonic signal.

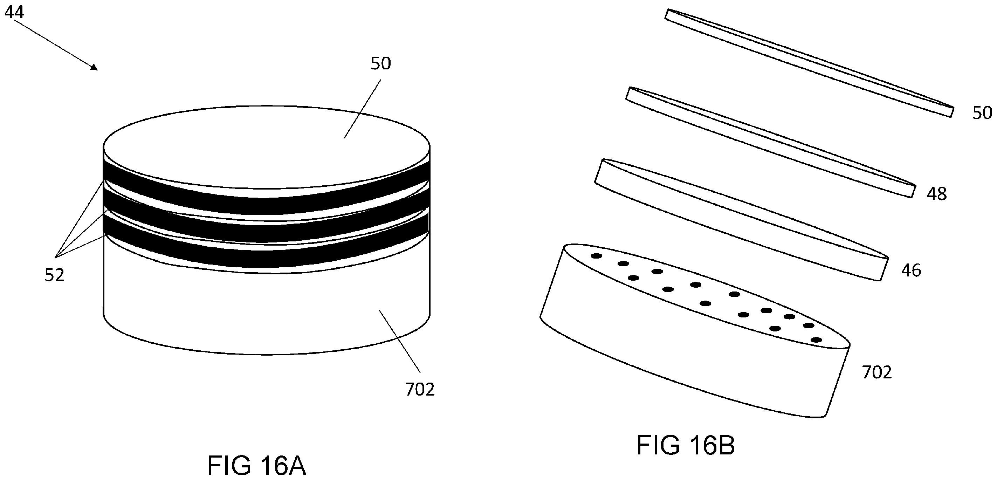

Figure 16A shows a PMUT array 702 arranged in a stack 44 with multiple layers of different impedance arranged in front of the PMUT array 702. Figure 16B is an exploded view of Figure 16A.

A housing layer 46 is arranged above the PMUT array 702. The housing layer 46 is fabricated from a gel and has a good impedance match with the PMUT array 702. A second layer 48 is arranged above the housing layer 46, and has a different impedance to the housing layer 46. Finally, a third layer 50 is arranged on top, and forms the exterior layer. This exterior layer 50 may be fairly hard and light in order to protect the PMUT stack 44.

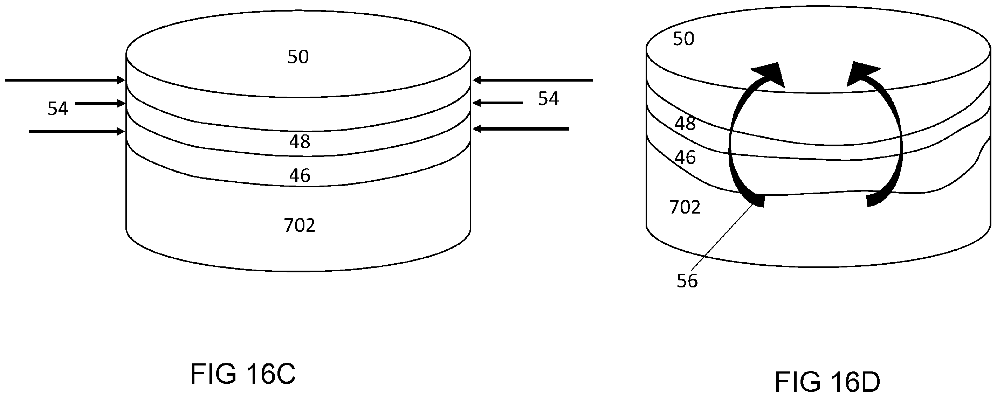

Piezoelectric strips 52 are affixed around the exterior of the stack 44 (one for each of the layers 46, 48, 50). When current is applied to the piezoelectric strip 52, it changes its thickness and different forces may be applied to each layer in the stack, shown by the arrows 54 in Figure 16C. This causes deformation of the layers in the stack, causing pressure variation between each layer 46, 48, 50, such that the wave fronts 56 shown in Figure 16D can be controlled using the pressure variation and directed. The variation in pressure creates a sound gradient that can provide a "lens effect", which as explained earlier, can have the same effect as changing the position of the PMUT elements themselves.

The layers 46, 48, 50 become harder away from the PMUT and towards the exterior. The layer 46 above the PMUT is typically relatively soft, such as a gel, or even air. The graduation transition in hardness ensures a good impedance matching strategy. If a hard surface was layered above the gel or air layer 46, all the transmitted energy from the PMUT array 702 would be reflected back.

If the outer layer 50 is strong, this can protect the PMUT array 702. The piezoelectric strips 52 can move and bend the PMUT array 702. This can be used to make "crack free" layers of dirt and dust, and also to "check" the state of the array when imaging under varying conditions.

The layers 46, 48, 50 may wear down over time, changing the acoustic transfer function. However, in accordance with the present invention, the acoustic transfer function may be modified "in situ". For example, a previous acoustic transfer function may be used to obtain an image. This stored acoustic transfer function may then be modified in order to obtain a sharper image. Having multiple reflectors arranged around the array, for example in one of the layers 46, 48, 50, compared to using acoustic ports shown in Figure 15, makes imaging less vulnerable to changes in the shape of the housing surrounding the PMUT due to the possibility of amending the acoustic transfer function.

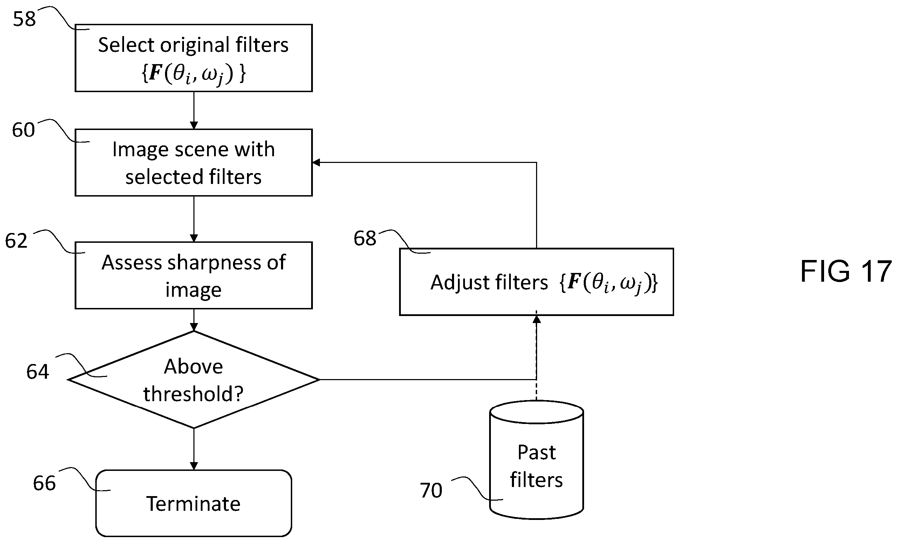

Figure 17 is a flowchart illustrating a method of updating the directional impulse responses to improve the quality of an image which is obtained, using any of the above embodiments with reflectors in the acoustic resonance cavities. If the "wrong" filters $F(\theta_i, \omega_j)$ are selected, then the image obtained from the ultrasonic imaging will almost always be "smeared out". Sharpness of the image may therefore be used as a criterion in order to update the filters which are selected to obtain the image.

At step 58, original filters $F(\theta_i, \omega_j)$ are selected, with the scene then imaged using these original selected filters at step 60. The scene will be imaged with a PMUT or PMUT array which transmits an ultrasonic signal, which is reflected and received, with the received signal processed by a processor locally at the PMUT or at a cloud server.

At step 62, the sharpness of the image is assessed. Measures such as image sharpness, see https://ieeexplore.ieee.org/document/6783859, or the ratio between low reflector values (close to 0) and high reflective values may be used to compute such sharpness.

If the sharpness is above a predetermined threshold, in step 64, then the process will terminate at step 66.

However, if the sharpness is not above this threshold then the filters will be adjusted in step 68. The filters may be adjusted using past filters 70 stored in a memory, for example in the server. The adjusted filters will then be used to image the scene, with the sharpness of the scene using the new filters assessed.

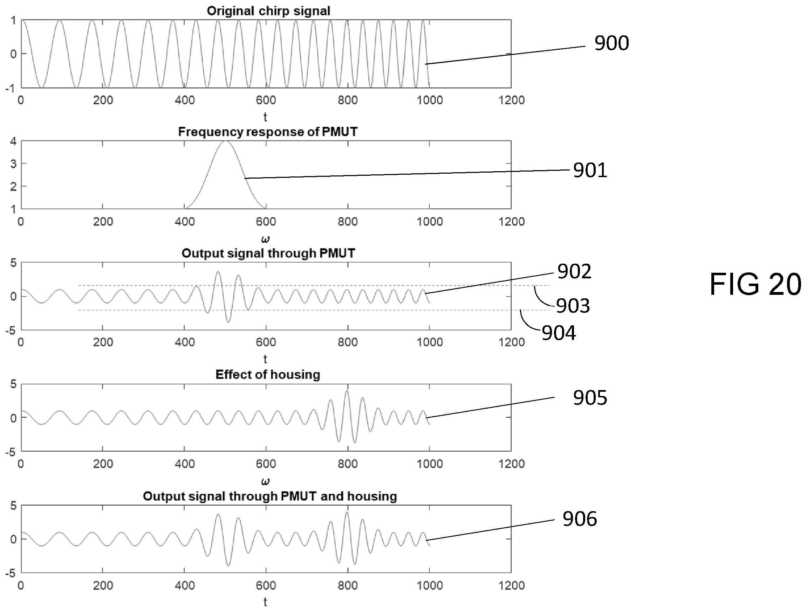

Figure 20 shows how the signal output from the transducer is changed by the PMUT and the housing. The topmost plot shows the original chirp signal s(t) 900 that is to be output from the PMUT and ideally amplified into the air. The frequency response 901 of the PMUT element itself, A($\omega$), is shown in the second graph where $\omega$ is the wavelength. The third graph shows the signal 902 resulting from driving the chirp s(t) through the PMUT. It can be seen that the centre frequencies are amplified. The dotted lines 903, 904 show the level (window) of energy that could have been attained for a flat spectrum, i.e. if the signal s(t) was modified to drive down the power at the centre frequency, or in other words, replacing s(t) by some modified signal s'(t) such that S($\omega$)A($\omega$)=K for some positive number K and for all $\omega$. The fourth graph 905 shows the effect of driving the chirp signal s(t) through a housing with a frequency response B($\omega$) (not shown), which has a different resonant frequency than A($\omega$) (the PMUT element itself). The bottom graph 906 shows the effect of driving s(t) through both the PMUT and the transducer, where both the PMUT and the housing frequencies are amplified.

Adjustments can be made to help achieve a flatter output spectrum compared to the spectrum 906 shown in Figure 20. The ways in which this can be achieved will now be described.

Let s(t) be the output signal, typically a chirp. In the ideal case, this is output as it is (plus noise):

$$y(t) = s(t) + n(t)$$

In practice, the result is *also* affected by the PMUT element itself which has a transfer function f(t).

$$y(t) = s(t) * f(t) + n(t)$$

Typically the filter f(t) is such that its frequency response F($\omega$) has one or more resonant peaks. It is also necessary to include the effect of the housing as g(t). If no adaptivity exists for the housing:

$$y(t) = s(t) * f(t) * g(t) + n(t)$$

The design goal may be to create an effective output signal y(t) which supports two criteria or a certain combination of the two criteria.

The first (a) is that |Y($\omega$)| is as large as possible, which indirectly means that the term $s(t) * f(t) * g(t)$ also has a magnitude as large as possible, assuming the expected noise magnitude to be constant, E |[N($\omega$)|=K. Therefore, (a) is essentially a SNR-maximising criterion.

The second criterion (b) is that |Y($\omega$)| is as constant as possible for all values of $\omega$ i.e. a flat-output-spectrum criterion. Certain parameters can be changed to try to optimize each criterion, or to create some useful compromise between the two.

The following equation can be rewritten:

$$y(t) = s(t) * f(t) * g(t) + n(t) = z(t) * g(t) + n(t)$$

Note that: $s(t) * f(t) = z(t)$.

This can be written out in time-domain as:

$$y(t) = z(t) * g(t) + n(t) = \sum_{k=0}^{K-1} z(k) * g(t-k) + n(t)$$

Recall that tuning the properties of the housing, effectively changes the housing filter or housing transfer function g(t), therefore, per sample of y(t):

$$y(t_1) = \sum_{k=0}^{K-1} z(k) * g_1(t_1 - k) + n(t_1)$$

$$y(t_2) = \sum_{k=0}^{K-1} z(k) * g_2(t_2 - k) + n(t_2)$$

$$y(t_3) = \sum_{k=0}^{K-1} z(k) * g_3(t_3 - k) + n(t_3)$$

The varying filters $g_i(.)$ are not fixed - they can be designed to change shape by adjusting the electrical parameters related to changing the housing. Thus, $g_i(.) = f(\alpha(t_i))$ can be defined, where $\alpha(t_i)$ is some physical parameter related to the housing (e.g. a current), which in turn defines the shape of $g_i(.)$. Assuming that there is a functional model of how this happens, there are now two tools that can be used to meet the two targets:

One is to adjust $z(k) = s(t) * f(t)$. This can be done indirectly by changing the driving signal s(t) - the PMUT response f(t) can not be changed.

The other way is to adjust the housing properties and thereby the time-specfic housing transfer function: $g_i(.) = f(\alpha(t_i))$.

As an example, consider the situation where s(t) is a linear chirp from frequency F0 to F1. There is a resonant peak at the middle, (F0+F1)/2 which has three times the energy of the other typical frequencies.

The time-specific filter $g_i(.)$ can also be adjusted - where i is the time window index - so that it amplifies a certain frequency by a factor of three.

Then, two things can be done. First, s(t) can be modified to become z(t), where the middle frequency of z(t) is damped at frequency (F0+F1)/2 to a level of 1/3 of the other frequencies.

Second, while chirping upwards from frequency F0, the time-specific filter $g_i$(.) keeps following the frequency of the chirp, so that every frequency upwards is amplified by a factor of 3 until the centre frequency (F0+F1)/2 is approached. Then the filter is not changed until the chirp has moved beyond the centre peak, where following the chirp signal is resumed again. Recall that around the centre frequency the PMUT itself amplifies the magnitude by a factor of 3, so there is no need for the housing to do the work.

The net result is a flat frequency output spectrum of the signal y(t), amplified by a factor of three all over the spectrum.

In practice it might be difficult to reach both criteria (flat spectrum and maximum SNR) perfectly, and so various acceptance regions and optimization strategies may be employed. One could provide regions of acceptance or penalties for deviations beyond certain off-target values using gradient descent, linear programming, nonlinear programming or neural networks.

It will be appreciated by those skilled in the art that the invention has been illustrated by describing one or more specific embodiments thereof, but is not limited to these embodiments; many variations and modifications are possible, within the scope of the accompanying claims.

**Claims**

1. A method of imaging using a piezoelectric micro-machined ultrasonic transducer, PMUT, or PMUT array, comprising:

   determining an acoustic transfer function corresponding to the effect of a plurality of discrete reflectors positioned between the PMUT or PMUT array and a scene to be imaged;
   imaging the scene using the PMUT or PMUT array by transmitting an ultrasonic signal and receiving the ultrasonic signal at the PMUT or PMUT array, after the ultrasonic signal has undergone one or more reflections;
   processing the received ultrasonic signal to generate an image by applying the inverse of the acoustic transfer function to the received ultrasonic signals.

2. The method of imaging of claim 1, wherein the PMUT or PMUT array is arranged to interface with an acoustic resonance cavity.

3. The method of imaging of claim 2, wherein the acoustic resonance cavity comprises an amorphous medium through which ultrasonic signals pass in use, said amorphous medium comprising the plurality of discrete reflectors distributed therein.

4. The method of imaging of any of claims 1 to 3, wherein the method further comprises adjusting the positions of the discrete reflectors in use to adjust an acoustic property of the acoustic resonance cavity.

5. The method of imaging of claim 4, comprising adjusting the acoustic property in use depending on a signal being transmitted or received by the PMUT or PMUT array.

6. The method of imaging of claim 4 or 5, wherein the acoustic property is the acoustic resonance volume of the acoustic resonance cavity.

7. The method of imaging of claim 6, comprising adjusting the acoustic property to match the outgoing frequency of the transmitted ultrasonic signal.

8. The method of imaging of any of claims 4 to 7, wherein adjusting the positions of the discrete reflectors adjusts a direction of the transmitted acoustic signal.

9. The method of imaging according to any preceding claim, wherein the determining step comprises:

   (a) selecting an acoustic transfer function for applying to the received signal for generating an image;
   (b) imaging using the PMUT or PMUT array by transmitting an ultrasonic signal and receiving the ultrasonic signal at the PMUT or PMUT array, after it has undergone one or more reflections;
   (c) using the inverse of the acoustic transfer function to process the received signal to generate an image;

(d) determining a sharpness parameter of the image and when the determined sharpness parameter is:

(i) not above a predetermined threshold, adjusting the transfer function before repeating steps (b)-(d);
(i) above a predetermined threshold, terminating the method.

10. The method of imaging of claim 9, wherein determining the sharpness parameter comprises determining an image sharpness or determining a ratio between low reflector values and high reflective values of the image.

11. The method of imaging of any preceding claim, further comprising adjusting the acoustic transfer function using past acoustic transfer functions stored in a memory.

12. The method of imaging of any preceding claim, wherein determining the acoustic transfer function comprises using an iterative algorithm.

13. The method of imaging of any preceding claim, wherein determining the acoustic transfer function comprises determining a directional impulse response.

14. The method of imaging of any preceding claim, wherein the plurality of discrete reflectors are elements of a structure having a plurality of holes.

15. The method of imaging of claim 14, wherein structure is a mesh or porous membrane.

EP 4 751 819 A2

FIG 1

FIG 2A

FIG 2B

FIG 3

FIG 4A

EP 4 751 819 A2

8

2

4

12

14b

FIG 4B

EP 4 751 819 A2

16    110a

302

18

304

**FIG 5A**

110b

16

302

18

304

**FIG 5B**

FIG 6A

FIG 6B

FIG 7B

210b

16

18

302

304

FIG 7A

210a

16

18

302

304

FIG 8A

FIG 8B

FIG 9

EP 4 751 819 A2

FIG 10

FIG 11

EP 4 751 819 A2

402    604

FIG 12A

402    604'

25    24

FIG 12B

402    604''

26

FIG 12C

28

FIG 13

FIG 14

EP 4 751 819 A2

140

42

804

602

FIG 15

FIG 16B

FIG 16A

FIG 16D

FIG 16C

FIG 17

- 58 — Select original filters $\{F(\theta_i, \omega_j)\}$
- 60 — Image scene with selected filters
- 62 — Assess sharpness of image
- 64 — Above threshold?
- 66 — Terminate
- 68 — Adjust filters $\{F(\theta_i, \omega_j)\}$
- 70 — Past filters

FIG 18

EP 4 751 819 A2

FIG 19

FIG 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021079160 A

**Non-patent literature cited in the description**

- **JEFFRIES, K et al.** Super-resolution ultrasound imaging. *Ultrasound in Medicine & Biology*, 2020, vol. 46 (4), 865-891